# EUROPEAN PATENT APPLICATION

(11) **EP 4 603 262 A1**
(43) Date of publication of application: **20.08.2025**
(21) Application number: 24860307.8
(22) Date of filing: 22.08.2024
(51) Int. Cl.: B29C 65/18, B29C 65/00, H01M 50/105, H01M 50/183, B29L 31/00

(54) **SEALING TOOL OF POUCH-TYPE SECONDARY BATTERY AND SEALING METHOD OF POUCH-TYPE SECONDARY BATTERY**

(30) Priority: 01.09.2023 KR 20230115920
(71) Applicant: LG Energy Solution, Ltd., Seoul 07335 (KR)
(72) Inventor: KWON, Myung Bin, Daejeon 34122 (KR)
(74) Representative: Goddar, Heinz J.
(86) International application number: PCT/KR2024/012489
(87) International publication number: WO 2025/048387

(57) **Abstract**

A sealing tool according to one aspect of the present disclosure includes a first sealing block and a second sealing block facing each other, wherein the first sealing block includes a first fixing part; and a first replacement part configured to be coupled to and detachable from the first fixing part; and the second sealing block includes a second fixing part; and a second replacement part configured to be coupled to and detachable from the second fixing part; wherein at least one of the first and second replacement parts is formed with a groove for an electrode lead to be received in a position corresponding to the electrode lead.

## Description

### [Technical Field]

This application claims the benefit of priority from Korean Patent Application No. 10-2023-0115920, filed on September 01, 2023, the disclosures of which are incorporated herein by reference.

The present disclosure relates to a sealing tool and sealing method of a pouch-type secondary battery, and more particularly to a sealing tool and sealing method that can reduce the time and cost for producing new sealing tools in response to changes in the dimensions of electrode lead.

### [Background]

Lithium secondary batteries can be classified according to the structure of positive electrode/separator/negative electrode electrode assemblies. The electrode assemblies representatively include a jelly-roll (wound-type) electrode assembly having a structure in which long sheet-type positive and negative electrodes are wound with a separator interposed therebetween, and a stack-type electrode assembly having a plurality of positive and negative electrodes cut into predetermined sized units and sequentially stacked with a separator interposed therebetween, a stack/folding type electrode assembly having a structure in which bi-cells or mono-cells having positive and negative electrodes of a predetermined size stacked with a separator interposed therebetween, are wound with a separator film, etc.

Lithium secondary batteries can be categorized into cylindrical batteries, prismatic batteries, pouch-type batteries, and the like according to the shape. Among them, a pouch-type battery has the advantage that the weight of the battery can be significantly reduced compared to a cylindrical or prismatic battery by using a pouch exterior material comprising a multilayer film of a metal layer (foil) and a synthetic resin layer coated on the top surface and the lower surface of the metal layer, so that the battery can be lightweight and can be changed into various shapes.

The pouch exterior material generally comprises a lower exterior material in which the electrode assembly is accommodated, and an upper exterior material that seals the upper portion of the lower exterior material. The secondary battery is pre-assembled by accommodating the electrode assembly in an accommodation portion of the lower exterior material, then adhering the edges around the lower exterior material accommodation portion and the corresponding edge of the upper exterior material, thermally fusing the adhered portion, inserting an electrolyte, and sealing the remaining portion.

Sealing of the pouch exterior material is performed using a sealing tool. A typical sealing tool comprises a first sealing block for pressing the upper portion of the sealing part of the pouch exterior material and a second sealing block for pressing the lower portion of the sealing part.

Meanwhile, the dimension of electrode lead, types of pouch exterior materials, etc. are becoming diverse, and in order to optimize the sealing process, the design of the sealing tool should be changed in response to the changes in the dimensions of electrode lead and types of pouch exterior materials, etc. However, due to the time and cost limitations required to manufacture a new sealing tool, the sealing process is being performed with the same dimensions of the sealing tool, which impacts the sealing quality. Therefore, it is necessary to develop a technology that can optimize the sealing tool while reducing cost and time.

### [Summary]

### [Technical Problem]

The present disclosure is directed to providing a sealing tool that can be optimized in response to changes in the dimensions of electrode lead and lead films, while also saving cost and time.

### [Technical Solution]

According to one aspect of the present disclosure, a sealing tool of a pouch-type secondary battery for sealing a pouch exterior material in which an electrode assembly is embedded is provided. The sealing tool includes a first sealing block and a second sealing block facing each other, wherein the first sealing block includes a first fixing part; and a first replacement part, the first replacement part being configured to be coupled to and detachable from the first fixing part; the second sealing block includes a second fixing part; and a second replacement part, the second replacement part being configured to be coupled to and detachable from the second fixing part; and wherein at least one of the first replacement part or the second replacement part includes a groove for an electrode lead to be received in a position corresponding to the electrode lead.

In one embodiment, the groove has a dimension corresponding to a horizontal direction (x-direction) length of the electrode lead to be received in the groove, and a dimension corresponding to a thickness direction (z-direction) length of the electrode lead.

In one embodiment, the groove has a dimension corresponding to a horizontal direction (x-direction) length of a lead film to be received in the groove, and a dimension corresponding to a sum of thickness direction (z-direction) lengths of the electrode lead and the lead film.

In one embodiment, the first sealing block and the second sealing block are configured to apply pressure to a sealing part of a pouch-type secondary battery disposed therebetween.

In one embodiment, the first and second replacement parts each comprise a respective pressing surface for applying pressure to the sealing part of the pouch-type secondary battery.

In one embodiment, the groove has trapezoidal shape, such that the length in the horizontal direction (x-direction) of the inlet of the groove is greater than the length in the horizontal direction of the inside of the groove.

In one embodiment, the groove comprises two or more stepped portions.

The sealing tool according to one embodiment, further including a heating member coupled to each of the first and second fixing parts and configured to heat the first and second fixing parts.

The sealing tool according to one embodiment, wherein the heating member is embedded in each of the first and second fixing parts.

The sealing tool according to one embodiment, further including: a first lifting member coupled to the first sealing block; and a second lifting member coupled to the second sealing block, for moving the first and second sealing blocks in the direction of pressure and vice versa.

In one embodiment, the first fixing part and the first replacement part are coupled and fixed by a bolt-nut engagement, and the second fixing part and the second replacement part are coupled and fixed by a bolt-nut engagement.

In one embodiment, the first fixing part and the first replacement part are configured to be slidably coupled, and the second fixing part and the second replacement part are configured to be slidably coupled.

In one embodiment, the first replacement part and/or the second replacement part are provided in several types with different positions and dimensions of the grooves.

According to another embodiment of the present disclosure, a sealing method of a pouch-type secondary battery for sealing a pouch exterior material in which an electrode assembly is embedded is provided.

The sealing method of the pouch-type secondary battery, comprising: a replacement part selection process for selecting first and second replacement parts having grooves corresponding to a position of an electrode lead and a dimension of an electrode lead, respectively; a sealing block preparation process for preparing a first sealing block by coupling the selected first replacement part to a first fixing part and preparing a second sealing block by coupling the selected second replacement part to a second fixing part; a disposition process of disposing a sealing part of a pouch-type secondary battery between the first and the second sealing blocks; and a process of applying pressure to the sealing part by contacting the first and second sealing blocks.

In one embodiment, the sealing method uses a sealing tool, wherein the sealing tool, comprising:
a first sealing block and a second sealing block facing each other,
wherein the first sealing block includes a first fixing part; and a first replacement part configured to be coupled to and detachable from the first fixing part; and
the second sealing block including a second fixing part; and a second replacement part configured to be coupled to and detachable from the second fixing part,
wherein at least one of the first and second replacement parts is formed with a groove for electrode lead to be seated in a position corresponding to the electrode lead.

In one embodiment, in the replacement part selection process, the first replacement part and/or second replacement part are provided in several types with different positions and dimensions of the grooves.

In one embodiment, the groove has a dimension corresponding to a horizontal direction (x-direction) length of the electrode lead to be received in the groove, and a dimension corresponding to a thickness direction (z-direction) length of the electrode lead.

In one embodiment, the groove has a dimension corresponding to a horizontal direction (x-direction) length of the lead film to be received in the groove, and a dimension corresponding to a sum of thickness direction (z-direction) lengths of the electrode lead and the lead film.

### [Advantageous Effects]

According to exemplary embodiments of the present disclosure, a sealing tool can be manufactured by producing in advance several types of replacement parts with various positions and dimensions of grooves in which electrode lead are to be seated, and assembling the corresponding replacement parts to fixing parts when the position and/or dimensions of the electrode lead change, thereby providing a sealing tool that can optimize sealing performance, reducing costs and avoiding the possibility of mold errors.

### [Brief Description of the Drawings]

FIG. 1 is a perspective view illustrating a sealing process of a pouch-type secondary battery according to one embodiment of the present disclosure.
FIG. 2 is a top view and a cross-sectional view of a pouch-type secondary battery according to one embodiment of the present disclosure.
FIG. 3 is a front view of a sealing tool according to one embodiment.
FIG. 4 to FIG. 5 are drawings to illustrate the effects of the present disclosure.
FIG. 6 is a drawing illustrating various embodiments of a sealing block of the present disclosure.
FIG. 7 is a perspective view illustrating a sealing process of a pouch-type secondary battery according to another embodiment of the present disclosure.
FIG. 8 is a drawing illustrating a top view and a front view of a pouch-type secondary battery according to one embodiment.
FIG. 9 is a front view of a sealing tool according to another embodiment of the present disclosure.
FIG. 10 is a drawing to illustrate a coupling method of a fixing part and a replacement part according to one embodiment of the present disclosure.
FIG. 11 is a front view of a replacement part according to one embodiment of the present disclosure.
FIG. 12 is a front view of a replacement part according to one embodiment of the present disclosure.
FIG. 13 is a flowchart for describing a sealing method of a pouch-type secondary battery according to one embodiment of the present disclosure.

### [Description of Reference Numerals]

10: pouch-type secondary battery
13: electrode lead
14a: sealing part
15a,15b: pouch exterior material
17: lead film
20,30,40: sealing tool
21,31: first sealing block
21a,31a,41a: first replacement part
21b,31b: first fixing part
22,32: second sealing block
22a,32a: second replacement part
22b,32b: second fixing part
21c,22c,31c,32c,41c,42c: groove

### [Detailed Description]

Hereinafter, the present disclosure will be described in detail with reference to the drawings. Prior to this, terms and words used in the present specification and claims should not be construed as limited to general or dictionary terms and should be interpreted with the meaning and concept in accordance with the technical idea of the present disclosure based on the principle that the inventors have appropriately defined the concepts of terms in order to explain the invention in the best way.

Accordingly, it is to be understood that the embodiments described herein, and the configurations illustrated in the drawings are only the most preferred embodiments of the present disclosure and are not intended to be representative of all of the technical ideas of the present disclosure, and that there may be various equivalents and modifications that may be substituted for them at the time of filing.

**In** addition, in describing the present disclosure, specific descriptions of related disclosed configurations or functions are omitted where it is considered that such detailed descriptions would obscure the subject matter of the present disclosure.

The present disclosure is shown in embodiment to more fully explain the present disclosure to those of ordinary skill in the art, and therefore, the shapes and sizes of the components in the drawings may be exaggerated, omitted, or shown schematically for clarity. Accordingly, the size or proportions of each component are not necessarily indicative of its actual size or proportions.

### (first embodiment)

The present disclosure provides a sealing tool for a pouch-type secondary battery, as a first embodiment.

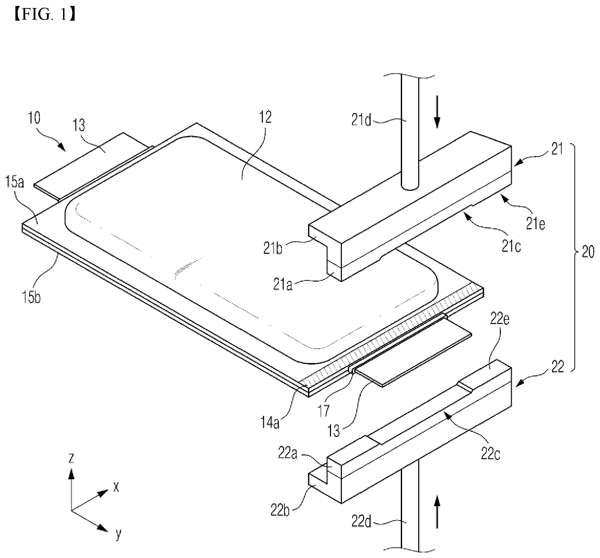

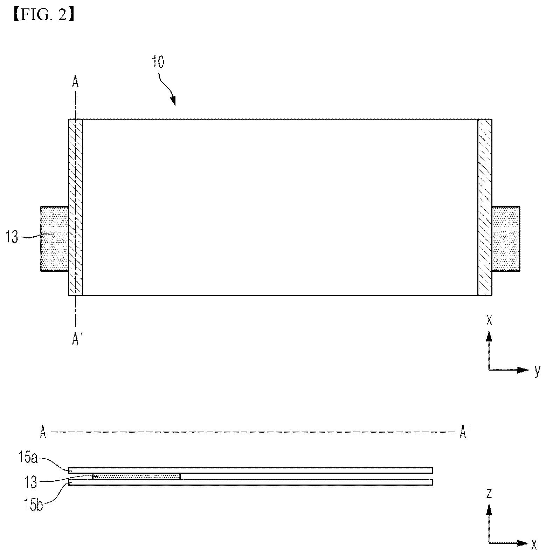

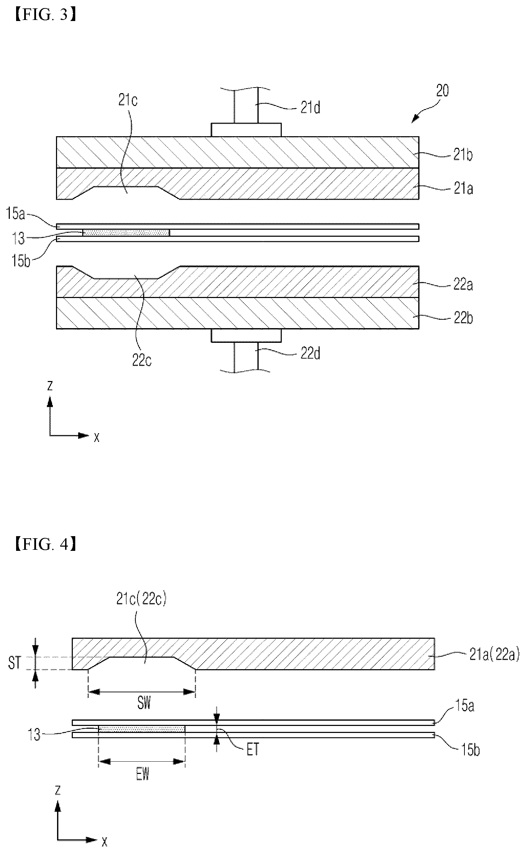

FIG. 1 is a perspective view illustrating a sealing process of a pouch-type secondary battery according to one embodiment of the present disclosure, FIG. 2 is a top view and a cross-sectional view of a pouch-type secondary battery according to one embodiment of the present disclosure, FIG. 3 is a front view of a sealing tool according to one embodiment, and FIG. 4 to FIG. 5 are drawings to illustrate the effects of the present disclosure.

Referring to these drawings, a sealing tool 20 of a pouch-type secondary battery according to exemplary embodiments of the present disclosure, which is for sealing a pouch exterior material 15a, 15b in which an electrode assembly (not shown) is embedded, includes a first sealing block 21 and a second sealing block 22 facing each other, wherein the first sealing block 21 includes a first fixing part 21b and a first replacement part 21a, wherein the second sealing block 22 includes a second fixing part 22b and a second replacement part 22a, wherein at least one of the first and second replacement parts 21a,22a may have recessed grooves 21c,22c formed therein at a position corresponding to an electrode lead 13, respectively.

According to exemplary embodiments of the present disclosure, the first replacement part 21a and/or the second replacement part 22a, in which the grooves 21c,22c are formed, are provided in several types with different positions and/or dimensions of the grooves 21c,22c. When the position and/or dimension of the electrode lead 13 is changed, among several types of the first and second replacement parts 21a,22a, the first and second replacement parts 21a,22a having grooves corresponding to the changed position and/or dimension of the electrode lead 13 may be selected, and they may be configured to be coupled to the first and second fixing parts 21b,22b, respectively.

The sealing block of a conventional sealing tool is composed of a single piece, and such design requires a new sealing tool to be manufactured in order to optimize the sealing in the case of any one of the position of the electrode lead, the thickness of the electrode lead, and the length of the electrode lead in the horizontal direction is changed.

The sealing block of the present disclosure includes a fixing part; and a replacement part configured to be detachably attached to the fixing part, wherein the replacement part is provided in several types with different positions and dimensions of the grooves, so that when the position and/or dimensions of the electrode lead change, a sealing tool can be manufactured by selecting a suitable replacement part and assembling it to the fixing part. Thus, a sealing tool optimally designed for the sealing object can be provided, and the sealing quality can be improved while saving cost, and the possibility of mold errors can be prevented.

Referring to FIGS. 1 and 2, a pouch-type secondary battery 10 to be sealed by a sealing tool of the present disclosure includes an electrode assembly (not shown), an electrode lead 13 coupling to the electrode assembly, and a pouch exterior material 15a,15b in which the electrode assembly is accommodated with the front end of the electrode lead 13 is drawn out to the outside. The pouch exterior material 15a, 15b may include an accommodating part 12 for accommodating the electrode assembly and a sealing part formed along an edge surface of the accommodating part 12 and sealing the accommodating part 12. Then, the electrode lead 13 is drawn out to the outside through a sealing part 14a of any one of the sealing parts formed along the edge surface of the accommodating part. Here, the sealing part is a concept including a portion to be sealed.

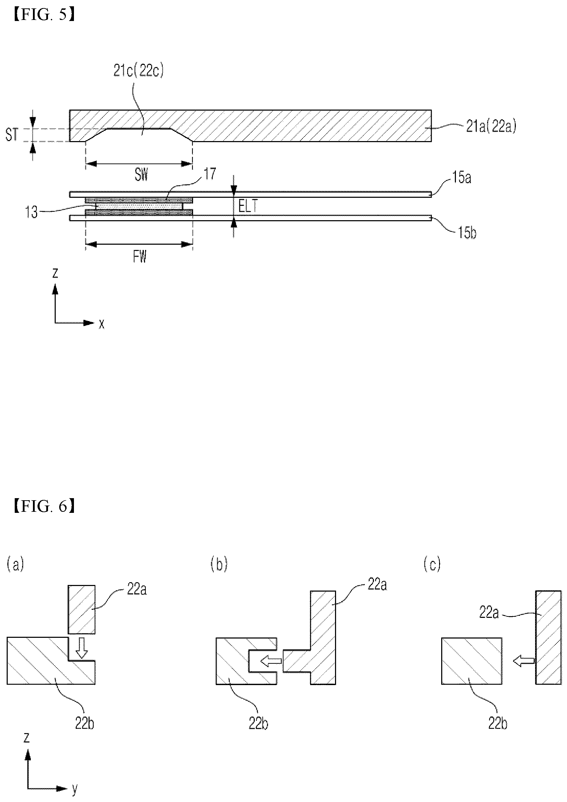

Referring to FIG. 1 and FIG. 5, in order to prevent electricity generated from the electrode assembly from flowing through the electrode lead 13 to the pouch exterior material 15a,15b, a part of the electrode lead 13 may be surrounded by a lead film 17. In other words, sealing may be performed with the lead film 17 interposed between the electrode lead 13 and the pouch exterior material 15a,15b.

Hereinafter, embodiments of the sealing tool of the present disclosure will be described in detail with reference to the accompanying drawings.

The sealing tool 20 according to the first embodiment of the present disclosure, as shown in FIG. 1 to FIG. 5, is a sealing tool for sealing a pouch-type secondary battery, in which the front ends of a pair of electrode lead 13 are drawn out in opposite directions and includes a first sealing block 21 and a second sealing block 22 facing each other. The first and second sealing blocks 21, 22 play the role of a body for performing the sealing and may be composed of a metal material.

The first sealing block 21 includes a first fixing part 21b; and a first replacement part 21a configured to be coupled to and detachable from the first fixing part 21b; and the second sealing block 22 includes a second fixing part 22b; and a second replacement part 22a configured to be coupled to and detachable from the second fixing part 22b.

The first sealing block 21 and the second sealing block 22 are configured to apply pressure to the sealing part 14a of a pouch-type secondary battery disposed therebetween. As the mutual separation distance of the first sealing block 21 and the second sealing block 22 becomes closer, they contact the top surface and the lower surface of the sealing part 14a, respectively, thereby sealing the sealing part 14a.

The first and second replacement parts 21a,22a each comprise first and second pressing surfaces 21e,22e for pressing the sealing part 14a of the pouch-type secondary battery. The first and second replacement parts 21a,22a may comprise first and second pressing surfaces 21e,22e, respectively, on opposite sides of a coupling part to the first and second fixing parts 21b,22b, wherein a downward movement of the first sealing block 21 causes the first pressing surface 21e to contact the sealing part 14a, and a lifting movement of the second sealing block 22 causes the second pressing surface 22e to contact the sealing part 14a.

The sealing tool 20 according to one aspect of the present disclosure may further include: a first lifting member 21d coupled to the first sealing block 21; and a second lifting member 22d coupled to the second sealing block 22, for moving the first and second sealing blocks 21,22 in the direction of pressure and the opposite direction. Here, the lifting members 21d,22d may be provided by commonly used cylinders, etc., but not necessarily limited thereto, and include any means for enabling lifting of the sealing block.

In at least one of the first and second replacement parts 21a,22a, grooves 21c,22c are formed for seating the electrode lead in positions corresponding to the electrode lead 13. The grooves 21c,22c are configured such that the electrode lead 13, or a stacked body of the electrode lead 13 and the lead film 17, is seated so that the portion other than the electrode lead 13 is sufficiently pressurized and sealed. In addition, the electrode lead 13 or the stacked body of the electrode lead 13 and the lead film 17 is sealed with its thickness compensated by the grooves 21c,22c. Therefore, despite the step due to the difference in thickness in the portion in which only two layers of the pouch exterior material are sealed, and in the portion in which the pouch exterior material/lead film/electrode lead/lead film/pouch exterior material are sealed together, it is possible to apply pressure evenly thereon.

However, since the electrode lead 13 are not always constantly positioned in the grooves 21c,22c in the present sealing process, it is preferred that the grooves 21c,22c, as shown in FIG. 1 and FIG. 3, have an allowance considering tolerances in the cross-sectional shape of the conventional electrode lead 13. Specifically, the horizontal direction (x-axis direction) length of the grooves 21c,22c may be formed to be about 1% to 15%, 3% to 15%, 5% to 15% wider than the horizontal direction (x-axis direction) length of the electrode lead 13. However, the length in the horizontal direction of the groove is not limited thereto.

The groove may be formed in both the first and second replacement parts 21a,22a, or it may be formed in any one of the first and second replacement parts, in which case it may be formed in the second replacement part 22a, which is located in the lower portion of the electrode lead 13.

Depending on the material, the sales company, the capacity of the electrode assembly, and the design of the secondary battery, the draw-out position of the electrode lead 13, the length in the horizontal direction (x-direction), the length in the longitudinal direction (y-direction), and the length in the thickness direction (z-direction) of the electrode lead may be varied, and the lead film 17 may also be varied accordingly. In order to respond to such changes, the sealing tool 20 according to one aspect of the present disclosure, the first replacement part 21a and/or the second replacement part 22a formed with the grooves are formed in several types with different positions and dimensions of the grooves, and the first and second replacement parts 21a,22a are replaced according to the positions and dimensions of the electrode lead 13.

Hereinafter, the operation of the present disclosure will be described with reference to FIGS. 4 and 5.

Referring to FIG. 4, in one embodiment, the sealing part of the portion in which the electrode lead 13 is located is sealed with the electrode lead 13 interposed between two layers of pouch exterior material 15a,15b. The electrode lead 13 may have a horizontal direction (x-direction) length EW and a thickness direction (z-direction) length ET, and when the horizontal direction length EW and/or the thickness direction length ET of the electrode lead 13 is changed, it is necessary to correspondingly change the horizontal direction length SW and/or the thickness direction length ST of the grooves 21c,22c in the sealing block in which the electrode lead is seated. According to the present disclosure, the grooves 21c,22c have a dimension corresponding to a horizontal direction (x-direction) length EW of the electrode lead to be seated in the groove and a dimension corresponding to a thickness direction (z-direction) length ET of the electrode lead. In other words, by selecting a replacement part having a groove having a dimension corresponding to a thickness direction (z-direction) length of the electrode lead and coupling it to the fixing part, a sealing tool optimized for the dimensions of the changed electrode lead can be provided. In addition, even when the position of the electrode lead is changed, it is possible to provide a sealing tool optimized for the change in the position of the electrode lead by selecting, among several types of replacement parts having various positions of the grooves, a replacement part having a groove at a position suitable for the electrode lead to be seated and coupling it to the fixing part.

In addition, referring to FIG. 5, in another embodiment, the sealing part of the portion in which the electrode lead 13 is located may be sealed with a lead film 17 interposed between the electrode lead 13 and the pouch exterior material 15a,15b. When the horizontal direction (x-direction) length FW of the lead film 17 changes, it is necessary to correspondingly change the horizontal direction (x-direction) length SW of the groove in which the electrode lead 13 and the lead film 17 are seated in the sealing block. In addition, when the thickness of the lead film 17 and/or the thickness of the electrode lead 13 is changed, it is necessary to correspondingly change the thickness-direction length ST of the grooves 21c,22c in the sealing block in which the electrode lead are seated. According to the present disclosure, the grooves 21c,22c have a dimension corresponding to a length FW in the horizontal direction (x direction) of the lead film to be seated in the groove. Moreover, the grooves 21c,22c have a dimension corresponding to a total thickness direction (z-direction) length ELT of the electrode lead and the lead film to be seated in the groove. In other words, by selecting a replacement part having a groove having a dimension corresponding to a thickness direction (z-direction) length of the electrode lead and the lead film to be seated in the groove and coupling it to a fixing part, a sealing tool optimized for a changed dimension of the lead film and/or a changed dimension of the electrode lead can be provided. In addition, even when the position of the electrode lead and the lead film is changed, it is possible to provide a sealing tool optimized for the change in the position of the electrode lead by selecting, among several types of replacement parts having various positions of the grooves, a replacement part having a groove formed in a position suitable for the electrode lead and the lead film to be seated, and coupling the replacement part to the fixing part. FIG. 5 illustrates an embodiment in which the length in the horizontal direction of the lead film is greater than the length in the horizontal direction of the electrode lead, but in cases in which the length in the horizontal direction of the lead film is equal to or less than the length in the horizontal direction of the electrode lead, the groove may have a dimension corresponding to the length in the horizontal direction of the electrode lead instead of the length in the horizontal direction of the lead film.

The present disclosure prepares several types of replacement parts having different positions and dimensions of the grooves, selects a replacement part having a groove corresponding to a change in position and dimension of the electrode lead, and couples it to a fixing part to form a sealing block.

In selecting the replacement part, a replacement part having a groove formed at a corresponding position of the electrode lead and a groove having a dimension corresponding to a dimension of the electrode lead is selected. The groove may have a dimension corresponding to a horizontal direction (x-direction) length and a thickness direction (z-direction) length of the electrode lead to be seated in the groove. The groove may have a dimension corresponding to a horizontal direction (x-direction) length of the lead film to be seated in the groove, and a sum of the thickness direction lengths of the electrode lead and the lead film. The groove is formed at a position corresponding to a position of the electrode lead and/or a position of the lead film in the replacement part.

Accordingly, the sealing tool 20 according to one aspect of the present disclosure has a structure that enables the optimally designed replacement part to be selected and coupled to the fixing part when the positions and dimensions of the electrode lead change, thereby enabling sealing of pouch-type secondary batteries having various designs and dimensions without manufacturing a new sealing tool, resulting in cost savings.

The grooves 21c,22c may be a trapezoidal shape, such that the length in the horizontal direction (x-direction) of the inlet of the grooves 21c,22c is greater than the length in the horizontal direction of the inside of the groove, as shown in FIG. 3. In such a case, the risk of damage to the pouch exterior material may be reduced compared to a case where the grooves are rectangular shape.

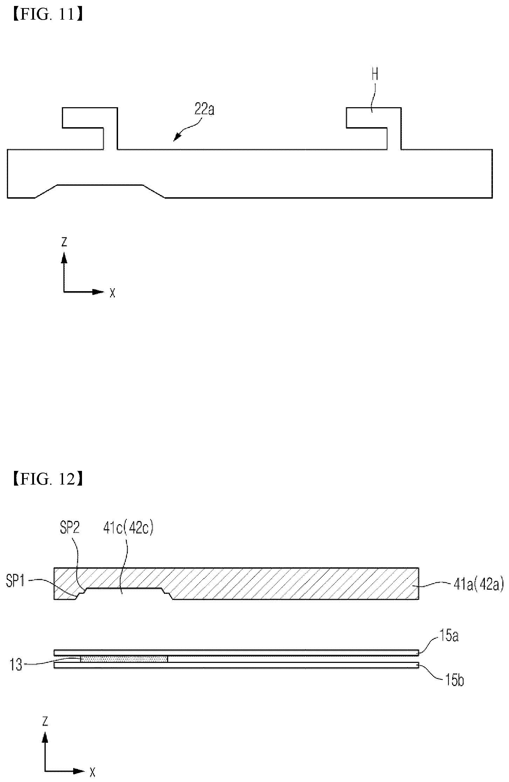

FIG. 12 is a front view of a replacement part according to one embodiment of the present disclosure. Referring to FIG. 12, the grooves 41c,42c formed in the replacement parts 41a,42a may include a first stepped portion SP1 and a second stepped portion SP2. While FIG. 12 illustrates an embodiment with two stepped portions, it is not limited thereto and may include three or more stepped portions. When there are two or more stepped portions, the electrode lead 13 and the pouch exterior material 15a, 15b may be more firmly adhered, thereby increasing the seal ability and reducing non-sealing portions. Although a lead film is not shown in FIG. 12, it will be apparent to a person skilled in the art that when sealing with a lead film around the electrode lead, the grooves of the replacement part can be modified to include two or more stepped portions.

FIG. 6 is a drawing illustrating various embodiments of a sealing block of the present disclosure. Referring to FIG. 6, the fixing part 22b and the replacement part 22a may be designed and configured to be coupled in various forms, such as (a) to (c).

In one embodiment, the first fixing part 21b and first replacement part 21a may be coupled fixed by a bolt-nut engagement, and the second fixing part 22b and second replacement part 22a may be coupled fixed by a bolt-nut engagement.

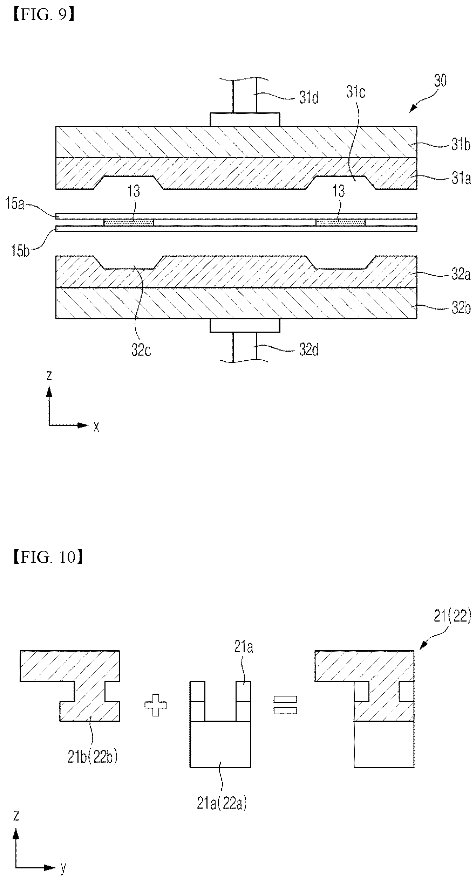

FIG. 10 is a drawing to illustrate a coupling method of a fixing part and a replacement part according to one embodiment of the present disclosure, and FIG. 11 is a front view of a replacement part according to one embodiment of the present disclosure.

Referring to FIGS. 10 and 11, the first fixing part 21b and first replacement part 21a may be configured to be slidably coupled, and the second fixing part 22b and second replacement part 22a may be configured to be slidably coupled. The first and second fixing parts 21b,22b may comprise sliding grooves (not shown) in which the first and second replacement parts 21a,22a are slidably movably coupled. The first and second replacement parts 21a,22a may comprise at least one coupling member H, which may be a hook. If there are two or more hooks H, the coupling members H may be disposed at predetermined intervals along the horizontal direction (x-direction) of the first and second replacement parts 21a,22a. The hooks are hook-shaped and play the role in fixing the replacement parts coupled to the fixing parts. When the fixing parts and the replacement parts are coupled in a sliding-hook method, they can be more easily coupled and detached.

The sealing tool 20 according to one embodiment may further comprise a heating member (not shown) for heating the first and second sealing blocks 21,22 in order to thermally pressurize the sealing part. The heating members may be coupled to the first and second fixing parts 21b,22b respectively and configured to heat the first and second fixing parts 21b,22b.

The sealing tool 20 according to another embodiment may comprise a heating member (not shown) embedded in the first and second fixing parts 21b,22b for thermally pressurizing the sealing part. The heating member may be located at an inner center part of the first and second fixing parts 21b,22b. The heating member may include a main heating element and an auxiliary heating element, for thermally pressurizing the sealing part at a uniform temperature. The main heating element may be disposed at an inner center part of the first and second fixing parts 21b,22b, and the auxiliary heating element may be disposed at an inner periphery part of the first and second fixing parts 21b,22b.

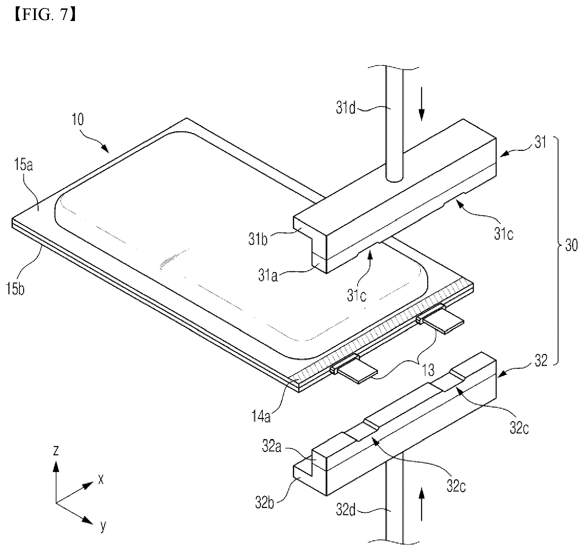

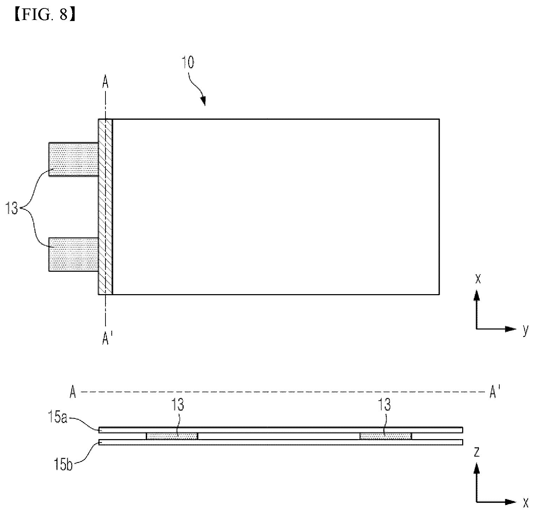

FIG. 7 is a perspective view illustrating a sealing process of a pouch-type secondary battery according to another embodiment of the present disclosure, FIG. 8 is a drawing illustrating a top view and a front view of a pouch-type secondary battery according to one embodiment, and FIG. 9 is a front view of a sealing tool according to another embodiment of the present disclosure.

Referring to these drawings, the sealing tool 30 according to a second embodiment is a sealing tool for sealing a pouch-type secondary battery in which the front ends of a pair of electrode lead 13 are drawn out in the same direction and includes a first sealing block 31 and a second sealing block 32 facing each other.

The first sealing block 31 includes a first fixing part 31b; and a first replacement part 31a configured to be coupled to and detachable from the first fixing part 31b; and the second sealing block 32 includes a second fixing part 32b; and a second replacement part 32a configured to be coupled to and detachable from the second fixing part 32b.

In at least one of the first and second replacement parts 31a,32a, grooves 31c,32c are formed for the electrode lead to be seated in a position and number corresponding to the electrode lead 13.

The sealing tool 30 according to embodiments illustrated in FIGS. 7 to 9 differs from the sealing tool of the first embodiment described above in the position and number of grooves 31c,32c formed in one replacement part. Other than this, the remaining technical description has been described previously, and thus redundant explanations are omitted.

### (second embodiment)

The present disclosure provides, in a second embodiment, a sealing method of a pouch-type secondary battery for sealing a pouch exterior material in which an electrode assembly is embedded.

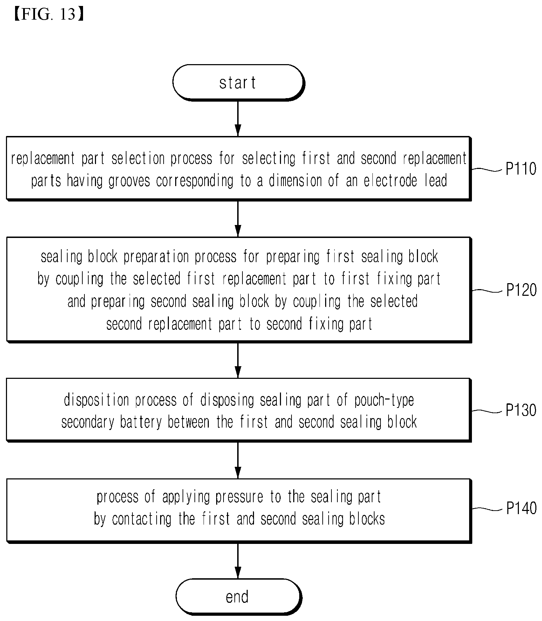

FIG. 13 is a flowchart for describing a sealing method of a pouch-type secondary battery according to one embodiment of the present disclosure. Referring to FIG. 13, a sealing method of a pouch-type secondary battery according to one aspect of the present disclosure, comprising: a replacement part selection process for selecting first and second replacement parts having grooves having dimensions corresponding to dimensions of electrode lead (P110); a sealing block preparation process for preparing a first sealing block by coupling the selected first replacement part to a first fixing part, and a second sealing block by coupling the selected second replacement part to a second fixing part (P120); a disposition process of disposing a sealing part of a pouch-type secondary battery between the first and second sealing blocks (P130); and a process of applying pressure to the sealing part by contacting the first and second sealing blocks (P140).

The sealing method may use the sealing tool 20,30 described above. For example, the sealing tool may comprise a first sealing block and a second sealing block facing each other, wherein the first sealing block comprises a first fixing part; and a first replacement part configured to be coupled to and detachable from the first fixing part; and the second sealing block comprises a second fixing part; and a second replacement part configured to be coupled to and detachable from the second fixing part; wherein at least one of the first and second replacement parts may have a groove formed therein for an electrode lead to be seated in a position corresponding to the electrode lead.

The replacement part selection process (P110) may be a process of selecting a replacement part having a groove formed suitable for a position of the electrode lead, a dimension of the electrode lead, and a dimension of the lead film. The sealing tool according to one aspect of the present disclosure includes a sealing block comprising a fixing part and a replacement part, wherein the replacement part is provided in several types with different positions and dimensions of the groove. In the replacement part selection process (P110), a replacement part having a groove optimized for a position of the electrode lead, a dimension of the electrode lead, and a dimension of the lead film is selected. When using the aforementioned sealing tool, in the replacement part selection process (P110), the first replacement part 21a,31a and/or second replacement part 22a,32a may be provided in several types with different positions and dimensions of the grooves 21c,22c,31c,32c.

As shown in FIG. 4, in an embodiment for sealing with the electrode lead 13 embedded between the two layers of pouch exterior material 15a,15b, the grooves 21c,22c,31c,32c may have a dimension corresponding to a horizontal direction (x-direction) length of the electrode lead to be seated in the groove, and a dimension corresponding to a thickness direction (z-direction) length of the electrode lead.

As shown in FIG. 5, in an embodiment of sealing with a lead film 17 interposed between the electrode lead 13 and the pouch exterior materials 15a,15b, the grooves 21c,22c,31c,32c may have a dimension corresponding to a horizontal direction (x-direction) length of the lead film to be seated in the groove, and a dimension corresponding to a sum of thickness direction (z-direction) lengths of the electrode lead and the lead film.

The sealing block preparation process (P120) may be a process of assembling the sealing block by coupling the selected replacement part to the fixing part. Since the coupling method of the fixing part and the replacement part has been described in detail previously, a redundant explanation will be omitted.

The disposition process (P130) may be a step of disposing a sealing part of a pouch-type secondary battery between the first sealing block and the second sealing block. The first replacement part of the first sealing block and the second replacement part of the second sealing block may be provided with first and second pressing surfaces for pressing the sealing part, respectively, and the first and second pressing surfaces may be facing the sealing part when the sealing part is disposed.

The pressing process (P140) may be a process of applying pressure to the sealing part by moving the first and second sealing blocks toward the sealing part on which the electrode lead are located, respectively, and contacting them.

The sealing method of the pouch-type secondary battery according to one aspect of the present disclosure can save time and cost for new manufacturing of the sealing tool, since several types of replacement parts having various dimensions of the grooves in which the electrode lead are seated can be manufactured in advance, and when the position and dimensions of the electrode lead and the lead film change, a replacement part having an optimized groove can be selected, and the sealing part in which the electrode lead are located can be sealed with the sealing block coupled to the selected replacement part. Also, seal ability can be improved by optimized design of the sealing tool.

As described above, the present disclosure has been described in more detail with reference to the accompanying drawings and the embodiments. Therefore, the configurations described herein or shown in the drawings are merely one embodiment of the present invention and do not represent all the technical spirit of the present disclosure such that it should be understood that there may be various equivalents and modifications capable of substituting the embodiments and the configurations at the time of filing the present application.

## Claims

1. A sealing tool of a pouch-type secondary battery for sealing a pouch exterior material in which an electrode assembly is embedded,
the sealing tool of the pouch-type secondary battery, comprising:
a first sealing block and a second sealing block facing each other,
wherein the first sealing block comprises a first fixing part; and a first replacement part, the first replacement part being configured to be coupled to and detachable from the first fixing part;
wherein the second sealing block comprises a second fixing part; and a second replacement part, the second replacement part being configured to be coupled to and detachable from the second fixing part; and
wherein at least one of the first replacement part or the second replacement part includes a groove for an electrode lead to be received in a position corresponding to the electrode lead.

2. The sealing tool of the pouch-type secondary battery of claim 1, wherein the groove has a dimension corresponding to a horizontal direction (x-direction) length of the electrode lead to be received in the groove, and a dimension corresponding to a thickness direction (z-direction) length of the electrode lead.

3. The sealing tool of the pouch-type secondary battery of claim 1, wherein the groove has a dimension corresponding to a horizontal direction (x-direction) length of a lead film to be received in the groove, and a dimension corresponding to a sum of thickness direction (z-direction) lengths of the electrode lead and the lead film.

4. The sealing tool of the pouch-type secondary battery of claim 1, wherein the first sealing block and the second sealing block are configured to apply pressure to a sealing part of a pouch-type secondary battery disposed therebetween.

5. The sealing tool of the pouch-type secondary battery of claim 1, wherein the first and second replacement parts each comprise a respective pressing surface for applying pressure to a sealing part of the pouch-type secondary battery.

6. The sealing tool of the pouch-type secondary battery of claim 1, wherein the groove has trapezoidal shape, such that a length in a horizontal direction (x-direction) of an inlet of the groove is greater than a length in the horizontal direction of an inside of the groove.

7. The sealing tool of the pouch-type secondary battery of claim 1, wherein the groove comprises two or more stepped portions.

8. The sealing tool of the pouch-type secondary battery of claim 1, further comprising a heating member coupled to each of the first and second fixing parts and configured to heat the first and second fixing parts.

9. The sealing tool of the pouch-type secondary battery of claim 8, wherein the heating member is embedded in each of the first and second fixing parts.

10. The sealing tool of the pouch-type secondary battery of claim 1, further comprising a first lifting member coupled to the first sealing block; and a second lifting member coupled to the second sealing block, for moving the first and second sealing blocks in the direction of pressure and vice versa.

11. The sealing tool of the pouch-type secondary battery of claim 1, wherein the first fixing part and the first replacement part are coupled and fixed by a bolt-nut engagement, and
the second fixing part and the second replacement part are coupled and fixed by a bolt-nut engagement.

12. The sealing tool of the pouch-type secondary battery of claim 1, wherein the first fixing part and the first replacement part are configured to be slidably coupled, and
the second fixing part and the second replacement part are configured to be slidably coupled.

13. The sealing tool of the pouch-type secondary battery of claim 1, wherein the first replacement part and/or the second replacement part are provided in several types with different positions and dimensions of the grooves.

14. A sealing method of a pouch-type secondary battery for sealing a pouch exterior material in which an electrode assembly is embedded,
the sealing method of the pouch-type secondary battery, comprising:
a replacement part selection process for selecting first and second replacement parts having grooves corresponding to a position of an electrode lead and a dimension of an electrode lead, respectively;
a sealing block preparation process for preparing a first sealing block by coupling the selected first replacement part to a first fixing part and preparing a second sealing block by coupling the selected second replacement part to a second fixing part;
a disposition process of disposing a sealing part of a pouch-type secondary battery between the first and second sealing block; and
a process of applying pressure to the sealing part by contacting the first and second sealing blocks.

15. The sealing method of the pouch-type secondary battery of claim 14, wherein
the sealing method uses a sealing tool,
wherein the sealing tool, comprising:
a first sealing block and a second sealing block facing each other,
wherein the first sealing block comprises a first fixing part; and a first replacement part configured to be coupled to and detachable from the first fixing part; and
the second sealing block comprises a second fixing part; and a second replacement part configured to be coupled to and detachable from the second fixing part,
wherein at least one of the first and second replacement parts is formed with a groove for electrode lead to be seated in a position corresponding to the electrode lead.

16. The sealing method of the pouch-type secondary battery of claim 15, wherein in the replacement part selection process,
the first replacement part and/or the second replacement part are provided in several types with different positions and dimensions of the grooves.

17. The sealing method of the pouch-type secondary battery of claim 14, wherein the groove has a dimension corresponding to a horizontal direction (x-direction) length of the electrode lead to be received in the groove, and a dimension corresponding to a thickness direction (z-direction) length of the electrode lead.

18. The sealing method of the pouch-type secondary battery of claim 14, wherein the groove has a dimension corresponding to a horizontal direction (x-direction) length of a lead film to be received in the groove, and a dimension corresponding to a sum of thickness direction (z-direction) lengths of the electrode lead and the lead film.
